# EUROPÄISCHE PATENTSCHRIFT

(11) **EP 4 556 724 B1**
(45) Veröffentlichungstag und Bekanntmachung des Hinweises auf die Patenterteilung: **22.07.2026**
(21) Anmeldenummer: 24212990.6
(22) Anmeldetag: 14.11.2024
(51) Int. Cl.: F16B 5/06

(54) **SENSOR-AKTOR-VERTEILER**
SENSOR-ACTUATOR-DISTRIBUTOR
COLLECTEUR D'ACTIONNEUR DE CAPTEUR

(30) Priorität: 17.11.2023 BE 202305940
(43) Veröffentlichungstag der Anmeldung: 21.05.2025
(73) Patentinhaber: Phoenix Contact GmbH & Co. KG, 32825 Blomberg (DE)
(72) Erfinder: LANGER, Falk, 08297 Zwönitz (DE); STEINBACH, Dirk, 04736 Waldheim (DE); SCHRAMM, Michael, 09235 Burkhardtsdorf / OT Meinersdorf (DE); UNGER-LACHMUND, Enrico, 08297 Zwönitz (DE)

(56) Entgegenhaltungen:
- DE-U1- 29 505 272
- US-B2- 10 178 790
- US-B2- 6 881 101

## Beschreibung

Die Erfindung betrifft einen Sensor-Aktor-Verteiler, mit einem Grundgehäuse und mit einem Anschlussgehäuse, wobei das Grundgehäuse einen Aufnahmebereich zum Aufstecken des Anschlussgehäuses aufweist und das Anschlussgehäuse zum Anschluss einer Stammleitung ausgebildet ist. Im Grundgehäuse des Sensor-Aktor-Verteilers sind mehrere Anschlüsse zum Anschluss von Sensoren und/oder Aktoren angeordnet. Außerdem ist im Aufnahmebereich des Grundgehäuses mindestens ein Anschluss zum Anschluss der Stammleitung angeordnet. Mindestens ein federbelastetes Schieberelement ist verschiebbar am Grundgehäuse oder am Anschlussgehäuse angeordnet, wobei das Schieberelement mindestens ein Rastelement aufweist. Das Anschlussgehäuse oder das Grundgehäuse weist mindestens ein zum Rastelement korrespondierendes Gegenrastelement auf. Das mindestens eine Rastelement weist eine Schräge auf, die derart angeordnet ist, dass beim Aufstecken des Anschlussgehäuses auf den Aufnahmebereich des Grundgehäuses das mindestens eine Gegenrastelement an der Schräge des mindestens einen Rastelements entlanggleitet, sodass das federbelastete Schieberelement entgegen einer auf ihn wirkenden Federkraft aus einer ersten Position in eine zweite Position verschoben wird. Das federbelastete Schieberelement wird durch die auf ihn wirkende Federkraft in seine erste Position zurückgeschoben, wenn das Anschlussgehäuse auf das Grundgehäuse aufgesteckt ist, sodass das Rastelement mit dem Gegenrastelement verrastet. An dem mindestens einen Schieberelement ist ein Betätigungsabschnitt ausgebildet, mit dem das Schieberelement entgegen der auf ihn wirkenden Federkraft aus der ersten Position in die zweite oder dritte Position verschiebbar ist, wobei in der zweiten und dritten Position des Schieberelements die Rastelemente nicht mit den Gegenrastelementen in Eingriff sind.

Sensor-Aktor-Verteiler der eingangs genannten Art sind seit Jahren aus der Praxis bekannt und werden insbesondere in der Maschinen- und Anlagetechnik eingesetzt. Beispielsweise ist in der US 6 881 101 B2 ein entsprechender Sensor-Aktor-Verteiler gezeigt. Sensor-Aktor-Verteiler werden zur Weiterleitung und Verteilung von Signalen und zur Stromversorgung der angeschlossenen Sensoren und Aktoren verwendet. Die Verbindung zwischen dem Sensor-Aktor-Verteiler und einer Steuerung oder einem anderen elektronischen Gerät erfolgt in der Regel über eine mehradrige Stammleitung. Die Stammleitung kann dabei fest mit dem Sensor-Aktor-Verteiler verbunden sein, indem das Kabel der Stammleitung über eine Kabeldurchführung in das Grundgehäuse eingeführt ist und die einzelnen Adern oder Litzen der Stammleitung an einem entsprechenden Anschluss im Grundgehäuse elektrisch angeschlossen sind. Problematisch ist dabei der Austausch eines Sensor-Aktor-Verteilers, der sehr aufwendig sein kann, sodass im Austauschfall mit langen Stillstandzeiten zu rechnen ist.

Alternativ zu einem festen Anschluss kann die Stammleitung auch über ein Anschlussgehäuse an einem Aufnahmebereich des Grundgehäuses angeschlossen werden. Das Anschlussgehäuse dient dabei zur Aufnahme eines Endes der Stammleitung und somit in erster Linie zur mechanischen Verbindung der Stammleitung mit dem Sensor-Aktor-Verteiler. Die elektrische Verbindung der einzelnen Adern oder Litzen der Stammleitung mit einer in der Regel im Grundgehäuse angeordneten Leiterplatte erfolgt dann üblicherweise über Leiterplattenklemmen oder über Leiterplatten-Steckverbinder.

Ein solcher Sensor-Aktor-Verteiler, bei dem der elektrische Anschluss der einzelnen Adern der Stammleitung über einen Leiterplatten-Steckverbinder erfolgt, ist aus der DE 295 05 272 U1 bekannt. Bei dem bekannten Sensor-Aktor-Verteiler ist ein erstes Steckerteil auf der Leiterplatte im Grundgehäuse angelötet und ein korrespondierendes zweites Steckerteil im Anschlussgehäuse befestigt. Sind die einzelnen Adern oder Litzen der Stammleitung an dem zweiten Steckerteil angeschlossen, so kann die elektrische Verbindung der Stammleitung mit dem Sensor-Aktor-Verteiler einfach dadurch erfolgen, dass das Anschlussgehäuse mit dem Steckerteil auf das auf der Leiterplatte aufgelötete Steckerteil aufgesteckt wird.

Die mechanische Befestigung des haubenartigen Anschlussgehäuses an dem Grundgehäuse erfolgt mittels einer Schraubverbindung, wozu mehrere Schrauben in entsprechende Bohrungen im Grundgehäuse eingeschraubt werden müssen, wobei die Schrauben bzw. die Bohrungen in der Regel in den Ecken des Anschlussgehäuses bzw. des Aufnahmebereichs des Grundgehäuses angeordnet sind. Hierzu ist nicht nur ein passender Schraubendreher erforderlich, das Einschrauben von in der Regel vier Schrauben ist auch mit einem gewissen Zeitaufwand verbunden.

Der vorliegenden Erfindung liegt daher die Aufgabe zugrunde, einen Sensor-Aktor-Verteiler zur Verfügung zu stellen, bei dem der Anschluss einer Stammleitung an den Sensor-Aktor-Verteiler möglichst einfach, vorzugsweise werkzeuglos, erfolgen kann.

Diese Aufgabe ist bei dem eingangs beschriebenen Sensor-Aktor-Verteiler mit den Merkmalen des Patentanspruchs 1 gelöst.

Der Sensor-Aktor Verteiler zeichnet sich gemäß der Erfindung dadurch aus, dass an den beiden Schieberelementen jeweils ein Halteelement und an den beiden Seiten des Anschlussgehäuses jeweils ein korrespondierendes Gegenhalteelement ausgebildet ist, wobei ein Schieberelement bei aufgestecktem Anschlussgehäuse entgegen der auf ihn wirkenden Federkraft in der dritten Position gehalten wird, wenn das Halteelement an dem Gegenhalteelement verrastet ist.

Der erfindungsgemäße Sensor-Aktor-Verteiler weist mindestens ein federbelastetes Schieberelement auf, das verschiebbar am Grundgehäuse oder am Anschlussgehäuse angeordnet ist, wobei das Schieberelement mindestens ein Rastelement aufweist. Außerdem weist das Anschlussgehäuse oder das Grundgehäuse mindestens ein zum Rastelement korrespondierendes Gegenrastelement auf. Ist das mindestens eine Schieberelement verschiebbar am Grundgehäuse angeordnet, so weist das Anschlussgehäuse ein zum Rastelement korrespondierendes Gegenrastelement auf. Ist das mindestens eine Schieberelement dagegen verschiebbar am Anschlussgehäuse angeordnet, so ist das zum Rastelement korrespondierende Gegenrastelement am Grundgehäuse ausgebildet.

Unabhängig davon, wo das Schieberelement angeordnet ist, weist das mindestens eine Rastelement eine Schräge auf, die derart angeordnet und ausgebildet ist, dass das mindestens eine Gegenrastelement an der Schräge des Rastelements entlanggleitet, wenn das Anschlussgehäuse auf den Aufnahmebereich des Grundgehäuses aufgesteckt wird. Dadurch wird das Rastelement und damit auch das federbelastete Schieberelement entgegen einer auf ihn wirkenden Federkraft aus einer ersten Position in eine zweite Position verschoben, wobei das Schieberelement durch die auf ihn wirkende Federkraft wieder in seine erste Position zurückgeschoben wird, wenn das Anschlussgehäuse auf das Grundgehäuse aufgesteckt ist, sodass dann das Rastelement mit dem Gegenrastelement verrastet.

Durch die erfindungsgemäße Anordnung des mindestens einen Schieberelements mit dem mindestens einen Rastelement und des korrespondierenden Gegenrastelements am Grundgehäuse bzw. am Anschlussgehäuse ist eine werkzeuglose und einfache Befestigung des Anschlussgehäuses am Grundgehäuse und damit auch ein einfacher Anschluss einer Stammleitung an den Sensor-Aktor-Verteiler möglich. Beim senkrechten Aufstecken des Anschlussgehäuses auf das Grundgehäuse gleitet das mindestens eine Gegenrastelement derart an der Schräge des Rastelements entlang, dass dadurch das am verschiebbaren Schieberelement angeordnete Rastelement aus einer ersten Position in eine zweite Position verschoben wird. Ist das Anschlussgehäuse auf das Grundgehäuse aufgesteckt, so hat das zur Verrastung mit dem Rastelement ausgebildete freie Ende des Gegenrastelements die Schräge am Rastelement passiert und das Schieberelement und damit auch das Rastelement wird durch die auf das Schieberelement wirkende Federkraft wieder in seine erste Position zurückgeschoben, in der dann das Rastelement mit dem Gegenrastelement verrastet. Bei Aufstecken des Anschlussgehäuses auf das Grundgehäuse wird somit gleichzeitig eine Auslenkung bzw. Verschiebung des Schieberelements mit dem Rastelement bewirkt, bis ein Eingreifen der zueinander korrespondierenden Geometrien von Rastelement und Gegenrastelement möglich ist und dann aufgrund der an dem Schieberelement angreifenden Federkraft die Verrastung erfolgt.

Wie zuvor ausgeführt worden ist, kann das mindestens eine Schieberelement entweder am Grundgehäuse oder am Anschlussgehäuse verschiebbar angeordnet sein, wobei dann das zum Rastelement korrespondierende Gegenrastelement am anderen Bauteil, also am Anschlussgehäuse oder am Grundgehäuse angeordnet bzw. ausgebildet ist. Nachfolgend wird zur Vereinfachung angenommen, dass das mindestens eine Schieberelement am Grundgehäuse verschiebbar angeordnet ist, sodass das Anschlussgehäuse das Gegenrastelement aufweist, ohne dass die Erfindung jedoch auf diese Alternative beschränkt ist.

Einleitend ist ausgeführt, dass das Anschlussgehäuse zum Anschluss einer Stammleitung ausgebildet ist und im Aufnahmebereich des Grundgehäuses mindestens ein Anschluss zum Anschluss der Stammleitung angeordnet ist. Das Anschlussgehäuse kann dabei so ausgebildet sein, dass es ein Ende der Stammleitung aufnimmt, wozu am Anschlussgehäuse dann eine Kabeldurchführung mit einer entsprechenden Kabelabdichtung, beispielsweise eine PG-Verschraubung, ausgebildet ist. Alternativ dazu kann am Anschlussgehäuse auch ein Steckverbinder eingebaut sein, insbesondere ein Rundsteckverbinder, beispielsweise ein M23 Steckverbinder, an dem die Stammleitung mittels eines mit der Stammleitung verbundenen Gegensteckverbinders angeschlossen werden kann.

Der im Aufnahmebereich des Grundgehäuses angeordnete Anschluss kann als Leiterplattenklemme ausgebildet sein, die mit einer im Grundgehäuse angeordneten Leiterplatte verbunden ist, und mehrere Leiteranschlusselemente zum Anschluss der einzelnen Adern oder Litzen der Stammleitung aufweist. Als Leiteranschlusselemente können dabei unterschiedliche Arten von Anschlussklemmen eingesetzt werden, beispielsweise Schraubklemmen, Federkraftklemmen oder Schneidklemmen. Alternativ dazu kann der Anschluss auch als Teil eines Leiterplatten-Steckverbinders ausgebildet sein, nämlich als Leiterplatten-Grundklemme, die mit einem korrespondierenden Stecker verbunden werden kann, der im Anschlussgehäuse angeordnet ist und mit den einzelnen Adern oder Litzen der Stammleitung oder mit dem im Anschlussgehäuse eingebauten Steckverbinder verbunden ist.

Grundsätzlich kann es ausreichend sein, wenn nur ein Schieberelement vorgesehen ist, wenn beispielsweise das Schieberelement mittig angeordnet ist und das Anschlussgehäuse eine relativ geringe Baugröße aufweist. Vorzugsweise sind jedoch zwei federbelastete Schieberelemente vorgesehen, insbesondere am Grundgehäuse verschiebbar angeordnet. Dabei ist dann jeweils ein Schieberelement an einer Seite des Grundgehäuses angeordnet, sodass das Anschlussgehäuse sicher am Grundgehäuse befestigt ist, wenn das Anschlussgehäuse auf das Grundgehäuse aufgesteckt ist und die Rastelemente mit den Gegenrastelementen verrastet sind. Die Anordnung von jeweils einem Schieberelemente an einer Seite des Grundgehäuses hat darüber hinaus den Vorteil, dass dann zwischen den beiden Schieberelementen ausreichend Bauraum im Aufnahmebereich des Grundgehäuses zur Verfügung steht, in dem beispielsweise eine Leiterplattenklemme zum Anschluss der einzelnen Adern oder Litzen der Stammleitung oder eine Stiftleiste eines Steckverbinders angeordnet sein kann.

Die auf das mindestens eine federbelastete Schieberelement wirkende Federkraft ist vorzugsweise dadurch realisiert, dass im Grundgehäuse ein Federelement angeordnet ist, das das Schieberelement derart mit einer Kraft beaufschlagt, dass die Kraft des Federelements einem Verschieben des Schieberelements aus seiner ersten Position in seine zweite Position entgegengerichtet ist. Zum Verschieben des Schieberelements aus der ersten Position in die zweite Position muss somit das Federelement entgegen seiner Federkraft ausgelenkt, beispielsweise zusammengedrückt werden.

Bezüglich der konkreten Realisierung des Federelements gibt es verschiedene Möglichkeiten. Gemäß einer bevorzugten Ausgestaltung ist das Federelement als vom Schieberelement separates Bauteil ausgebildet. Für das Schieberelement und das Bauteil können somit unterschiedliche Materialien verwendet werden, beispielsweise Kunststoff für das Schieberelement und Metall für das Federelement. Das Federelement kann dann beispielsweise als Blattfeder aus Edelstahl ausgebildet sein, sodass das Federelement einfach hergestellt werden kann.

Gemäß einer alternativen Ausgestaltung ist das Federelement einstückig mit dem Schieberelement ausgebildet. Das Schieberelement und das Federelement können dabei beispielsweise aus Kunststoff durch Spritzgießen hergestellt werden. Die einteilige Ausbildung des Federelements mit dem Schieberelement hat den Vorteil, dass nur ein Bauteil montiert werden muss.

Das Rastelement und das Gegenrastelement weisen zueinander korrespondierende Geometrien auf, die so ausgebildet sind, dass sie eine sichere Verrastung gewährleisten, wenn das Anschlussgehäuse auf das Grundgehäuse aufgesteckt ist. Gleichzeitig ermöglichen die Geometrien, dass das Anschlussgehäuse auf das Grundgehäuse aufgesteckt werden kann, indem das Rastelement beim Aufstecken durch das Gegenrastelement verschoben wird, wenn das Gegenrastelement an der Schräge des Rastelements entlanggleitet.

Gemäß einer bevorzugten Ausgestaltung weist dazu auch das mindestens eine Gegenrastelement eine zur Schräge des Rastelements korrespondierende Schräge auf. Beim Aufstecken des Anschlussgehäuses auf den Aufnahmebereich des Grundgehäuses gleiten dann die Schräge des Rastelements und die Schräge des Gegenrastelements aufeinander, was ein einfaches Aufstecken des Anschlussgehäuses auf das Grundgehäuse mit nur geringem Kraftaufwand ermöglicht. Durch die Ausbildung von zwei zueinander korrespondierenden Schrägen erfolgt darüber hinaus eine Zentrierung des Anschlussgehäuses zum Aufnahmebereich des Grundgehäuses, wodurch auch ein elektrischer Anschluss der Stammleitung über eine Steckverbinderanordnung erleichtert wird.

Das Rastelement und auch das Gegenrastelement sind dabei besonders bevorzugt jeweils als Rasthaken ausgebildet. Außerdem sind vorzugsweise an jedem Schieberelement nicht nur ein Rastelement, sondern mindestens zwei Rastelemente ausgebildet, wobei dann auch eine entsprechende Anzahl an Gegenrastelementen am Aufnahmegehäuse angeordnet sind.

Um eine ausreichend hohe IP-Schutzklasse zu gewährleisten ist gemäß einer weiteren vorteilhaften Ausgestaltung im Aufnahmebereich des Grundgehäuses ein Dichtelement angeordnet. Alternativ oder zusätzlich kann auch am Anschlussgehäuse ein Dichtelement vorgesehen sein, das dann wirksam ist, wenn das Anschlussgehäuse auf das Grundgehäuse bzw. dessen Aufnahmebereich aufgesteckt ist. Das Dichtelement kann insbesondere in eine dafür ausgebildete Nut eingesetzt oder eingespritzt sein.

Damit es beim Aufstecken des Anschlussgehäuses auf das Grundgehäuse nicht zu einem Verkanten oder zu einer fehlerhaften Positionierung beispielsweise eines im Anschlussgehäuse angeordneten Steckers kommt, können im Aufnahmebereich des Grundgehäuses vorzugsweise mehrere Führungselemente und am Anschlussgehäuse korrespondierende Führungselemente ausgebildet sein. Die Führungselemente am Grundgehäuse wirken dabei beim Aufstecken des Anschlussgehäuses auf den Aufnahmebereich mit den Führungselementen am Anschlussgehäuse zusammen. Die zueinander korrespondierenden Führungselemente können beispielsweise als Stege ausgebildet sein, die in entsprechende Nuten eingreifen.

Alternativ oder zusätzlich kann eine Führung und Zentrierung beim Aufstecken des Anschlussgehäuses auf das Grundgehäuse auch durch eine entsprechende Ausgestaltung von einzelnen Seiten des Anschlussgehäuses und von einzelnen Seiten des Grundgehäuses erreicht werden. Beim Aufstecken des Anschlussgehäuses auf das Grundgehäuse gleiten dann die Seiten des Anschlussgehäuses an den entsprechenden Seiten des Grundgehäuses entlang, bevor die Rastelemente und die Gegenrastelements miteinander in Eingriff kommen. Ein falsches, verdrehtes Aufstecken des Anschlussgehäuses auf das Grundgehäuse kann außerdem durch die Anordnung von zueinander korrespondierenden Kodierelementen am Anschlussgehäuse und am Grundgehäuse verhindert werden.

Gemäß der Erfindung ist das Anschlussgehäuse nicht nur einfach durch Verrasten am Grundgehäuse befestigbar, sondern kann auch einfach durch Lösen der Verrastung wieder von dem Grundgehäuse abgehoben werden. Dazu ist an dem mindestens einen Schieberelement ein Betätigungsabschnitt ausgebildet, mit dem das Schieberelement entgegen der auf ihn wirkenden Federkraft aus seiner ersten Position in die zweite oder über die zweite Position hinaus in eine dritte Position verschiebbar ist. In der zweiten Position des Schieberelements - und erst recht in seiner dritten Position - sind die Rastelemente nicht mit den Gegenrastelementen in Eingriff, sodass das die Verrastung zwischen dem Anschlussgehäuse und dem Grundgehäuse gelöst ist. Das Anschlussgehäuse kann dann einfach von dem Grundgehäuse abgehoben werden.

Um das Abheben des Anschlussgehäuses vom Grundgehäuse weiter zu erleichtern, ist gemäß der Erfindung an den Schieberelementen jeweils ein Halteelement und an den beiden Seiten des Anschlussgehäuses jeweils ein korrespondierendes Gegenhalteelement ausgebildet. Bei aufgestecktem Anschlussgehäuse wird dabei ein Schieberelement entgegen der auf ihn wirkenden Federkraft in der dritten Position gehalten, wenn das Halteelement an dem Gegenhalteelement verrastet ist. Die Rastelemente sind dadurch in einer Position gehalten bzw. blockiert, in der sie nicht mit den Gegenrastelementen in Eingriff sind. Dadurch kann das Anschlussgehäuse dann einfach vom Grundgehäuse abgehoben werden, ohne dass der Benutzer die Schieberelemente noch von Hand in ihrer dritten Position halten muss. Ist das Anschlussgehäuse vom Grundgehäuse abgehoben, so wird das Schieberelement durch die an ihm angreifende Federkraft automatisch wieder in seine erste Position verschoben, sodass auch das Halteelement wieder in seiner ersten Position bewegt wird.

Im Einzelnen gibt es mehrere Möglichkeiten, den erfindungsgemäßen Sensor-Aktor-Verteiler weiterzubilden und auszugestalten. Dazu wird verwiesen sowohl auf die nachgeordneten Patentansprüche als auch auf die Beschreibung der Ausführungsbeispiele in Verbindung mit der Zeichnung. In der Zeichnung zeigen
- Fig. 1: eine perspektivische Darstellung eines ersten Ausführungsbeispiels eines Sensor-Aktor-Verteilers, mit aufgestecktem Anschlussgehäuse,
- Fig. 2: der Sensor-Aktor-Verteiler gemäß Fig. 1, mit abgehobenem Anschlussgehäuse,
- Fig. 3: einen Teil des Grundgehäuses gemäß Fig. 2, ohne Anschlussgehäuse, in Draufsicht und in einer Schnittdarstellung,
- Fig. 4: der Teil des Sensor-Aktor-Verteilers gemäß Fig. 1, mit teilaufgestecktem Anschlussgehäuse, in Draufsicht und in einer Schnittdarstellung,
- Fig. 5: eine Schnittdarstellung des Teils des Sensor-Aktor-Verteilers gemäß Fig. 4, mit verriegeltem Anschlussgehäuse,
- Fig. 6: eine Schnittdarstellung des Teils des Sensor-Aktor-Verteilers gemäß Fig. 4, mit entriegeltem Anschlussgehäuse,
- Fig. 7: eine weitere Schnittdarstellung des Sensor-Aktor-Verteilers gemäß Fig. 6 und eine Detailvergrößerung der Schnittdarstellung,
- Fig. 8: eine perspektivische Darstellung zweier Ausführungsbeispiele eines Schieberelements,
- Fig. 9: eine perspektivische Darstellung eines zweiten Ausführungsbeispiels eines Sensor-Aktor-Verteilers, mit abgehobenem Anschlussgehäuse und
- Fig. 10: eine perspektivische Darstellung eines dritten Ausführungsbeispiels eines Sensor-Aktor-Verteilers, mit abgehobenem Anschlussgehäuse.

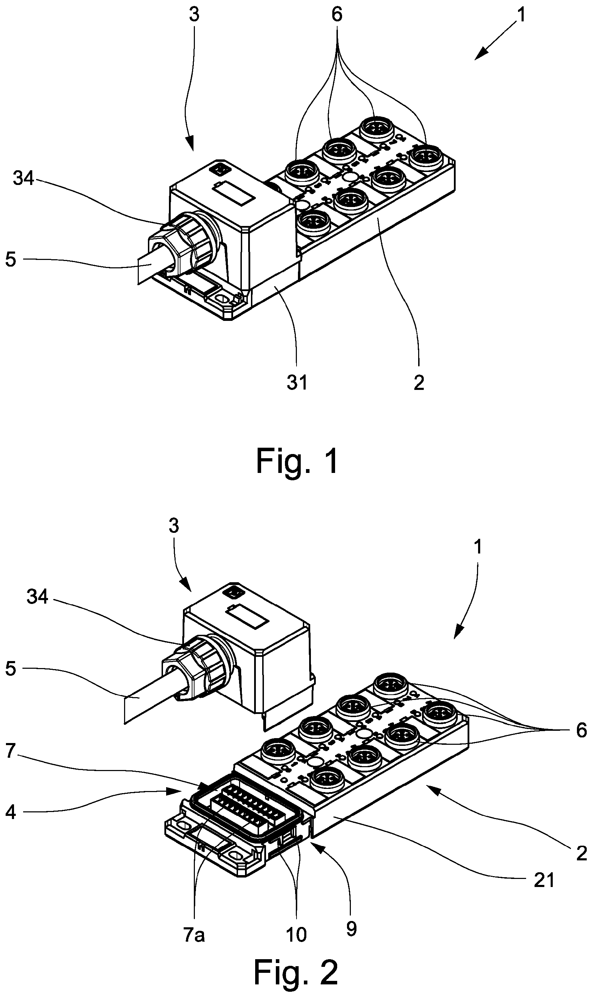

Fig. 1 zeigt eine perspektivische Darstellung eines bevorzugten Ausführungsbeispiels eines Sensor-Aktor-Verteilers 1 mit einem Grundgehäuse 2 und einem Anschlussgehäuse 3, das auf einen korrespondierenden Aufnahmebereich 4 am Grundgehäuse 2 aufgesteckt ist. Das haubenartige Anschlussgehäuse 3 ist bei diesem Ausführungsbeispiel zur Aufnahme eines Endes einer Stammleitung 5 ausgebildet, sodass die Stammleitung 5 mithilfe des Anschlussgehäuses 3 an dem Grundgehäuse 2 des Sensor-Aktor-Verteilers 1 befestigt werden kann. Im Grundgehäuse 2 des Sensor-Aktor-Verteilers 1 sind in dem Bereich, der nicht zur Aufnahme des Anschlussgehäuses 3 vorgesehen ist, mehrere Anschlüsse 6 zum Anschließen von Sensoren oder Aktoren angeordnet, wobei die vorliegend acht Anschlüsse 6 bei dem dargestellten Ausführungsbeispiel als M12-Buchsen ausgebildet sind. Selbstverständlich kann der Sensor-Aktor-Verteiler 1 auch eine andere Anzahl an Anschlüssen 6 zum Anschließen von Sensoren oder Aktoren aufweisen, beispielsweise 4, 6 oder 10.

Zum elektrischen Anschluss der einzelnen Adern oder Litzen der Stammleitung 5 ist im Aufnahmebereich 4 des Grundgehäuses 2 ein weiterer Anschluss 7 angeordnet, der bei dem in Fig. 2 dargestellten Ausführungsbeispiel als Teil eines Leiterplatten-Steckverbinders, nämlich als zwei Leiterplatten-Grundleisten 7a ausgebildet ist. Im Anschlussgehäuse 3 sind dann zu den beiden Leiterplatten-Grundleisten 7a korrespondierende Leiterplatten-stecker angeordnet, an denen die einzelnen Adern oder Litzen der Stammleitung 5 angeschlossen sind. Die vorliegende Erfindung ist jedoch nicht auf die in den Figuren dargestellten Ausgestaltungen des elektrischen Anschlusses für die Adern der Stammleitung 5 beschränkt, sondern ermöglicht grundsätzlich eine Vielzahl von unterschiedlichen Arten von Leiteranschlüssen.

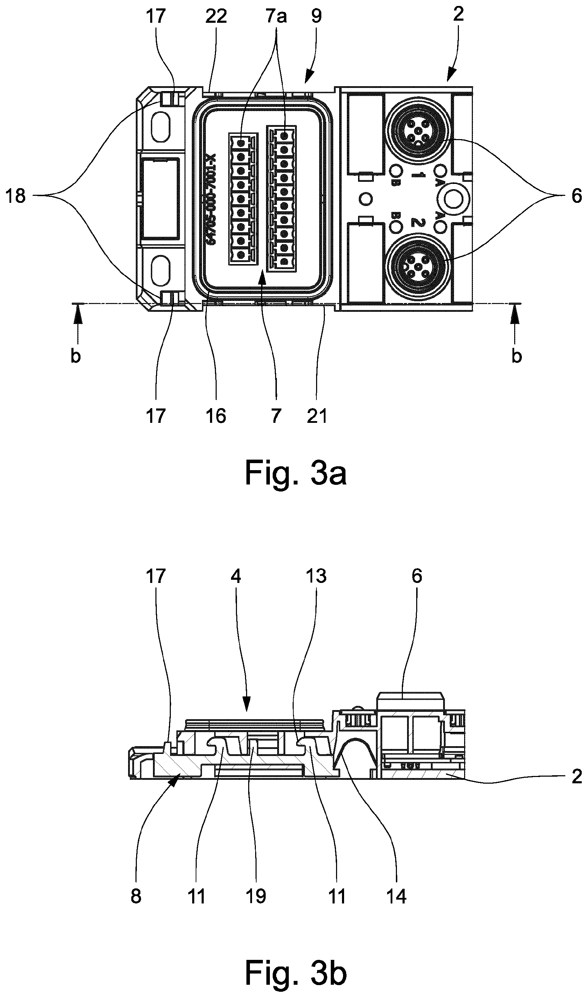

In Fig. 3 ist der, bezogen auf die Darstellung gemäß Fig. 1, linke Teil des Grundgehäuses 2 dargestellt, also im Wesentlichen der Aufnahmebereich 4 und nur zwei der daneben angeordneten Anschlüsse 6 für die Sensoren oder Aktoren. Fig. 3a zeigt dabei eine Draufsicht auf das Grundgehäuse 2 und Fig. 3b eine Schnittdarstellung entlang der Linie B-B. Aus der Schnittdarstellung gemäß Fig. 3b ist ersichtlich, dass ein federbelastetes Schieberelement 8 verschiebbar am Grundgehäuse 2 angeordnet ist. Hierzu ist an einer Seite 21 des Grundgehäuses 2 eine Ausnehmung 9 mit entsprechenden Führungselementen 10 zur Aufnahme und Führung des Schiebeelements 8 ausgebildet. Da bei der dargestellten, bevorzugten Ausgestaltung des Sensor-Aktor-Verteilers 1 zwei federbelastete Schieberelemente 8 am Grundgehäuse 2 angeordnet sind, sind auch auf der der Seite 21 gegenüberliegenden Seite 22 des Grundgehäuses 2 eine entsprechende Ausnehmung und entsprechende Führungselemente zur Aufnahme und Führung des zweiten Schiebelements 8 ausgebildet. In der perspektivischen Darstellung gemäß Fig. 2 ist jedoch die zweite Ausnehmung mit den Führungselementen an der zweiten Seite 22 des Grundgehäuses 2 nicht sichtbar.

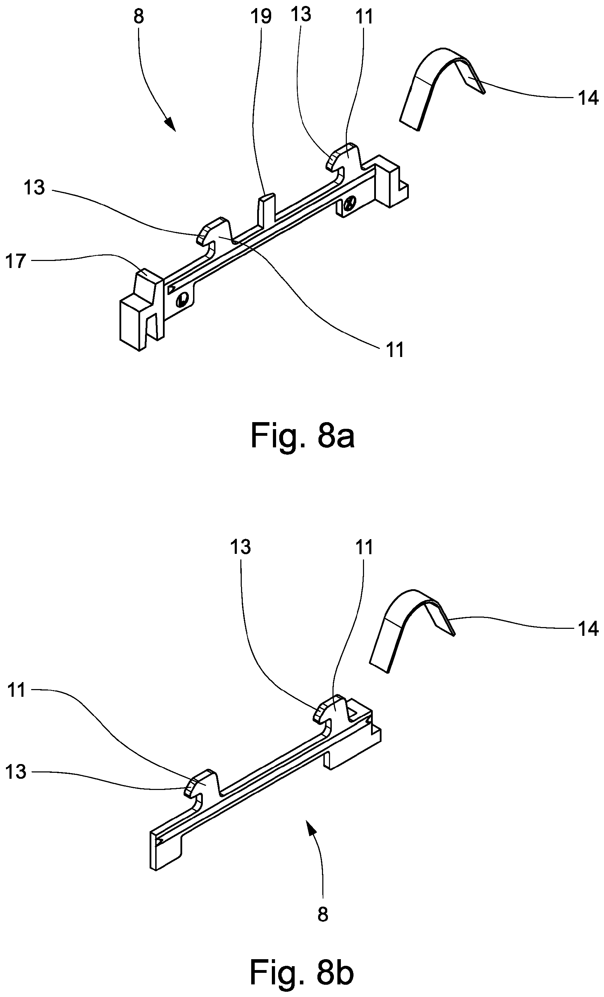

Aus der Schnittdarstellung gemäß Fig. 3b und insbesondere aus der separaten Darstellung zweier Schieberelemente 8 in Fig. 8a und 8b ist erkennbar, dass an dem Schieberelement 8 zwei als Rasthaken ausgebildete Rastelemente 11 ausgebildet sind. Die Rastelemente 11 dienen der Verrastung mit korrespondierenden Gegenrastelementen 12, die am Anschlussgehäuse 3 ausgebildet sind. Korrespondierend zur Anordnung der beiden Schieberelemente 8 an den beiden Seiten 21, 22 des Grundgehäuses 2 sind die Gegenrastelemente 12 an den entsprechenden Seiten 31, 32 des Anschlussgehäuses 3 ausgebildet.

Aus der Darstellung des Sensor-Aktor-Verteilers 1 mit einem abgehobenen Anschlussgehäuse 3 gemäß Fig. 2 ist ersichtlich, dass die Seiten 31, 32 des Anschlussgehäuses 3, an denen die Gegenrastelemente 12 ausgebildet sind, weiter nach unten, in Richtung des Grundgehäuses 2 vorstehen, als der umlaufende Abschnitt des Anschlussgehäuses 3. Dadurch decken die Seiten 31, 32 im aufgesteckten Zustand des Anschlussgehäuses 3 die Ausnehmungen 9 an den korrespondierenden Seiten 21, 22 des Grundgehäuses 2 und damit auch die in den Ausnehmungen 9 verschiebbar angeordneten Schieberelemente 8 ab, sodass diese vor Beschädigungen geschützt sind. Aus der Darstellung gemäß Fig. 2 ergibt sich darüber hinaus auch, zumindest indirekt, dass die Gegenrastelemente 12 an der Innenfläche der Seiten 31, 32 des Anschlussgehäuses 3 ausgebildet sind. Die nach unten vorstehenden Seiten 31, 32 dienen außerdem bei Aufstecken des Anschlussgehäuses 3 auf das Grundgehäuse 2 als Führungen, sodass das Anschlussgehäuse 3 richtig zum Aufnahmebereich 4 des Grundgehäuses 2 ausgerichtet wird.

Die beiden Rastelemente 11 eines Schieberelements 8 weisen jeweils an ihrer dem Anschlussgehäuse 3 zugewandten Oberseite eine Schräge 13 auf. Korrespondierend dazu weisen die Gegenrastelemente 12, die ebenfalls als Rasthaken ausgebildet sind, an ihrem dem Schieberelement 8 zugewandten freien Ende ebenfalls eine Schräge 15 auf. Außerdem sind im Grundgehäuse 2 noch zwei Federelemente 14 angeordnet, wobei jeweils ein Federelement 14 mit einem Schieberelement 8 derart zusammenwirkt, dass das jeweilige Federelement 14 das Schieberelement 8 mit einer Federkraft F beaufschlagt, die einer Verschiebung des Schieberelements 8 aus einer ersten Position in eine zweite Position entgegengerichtet ist.

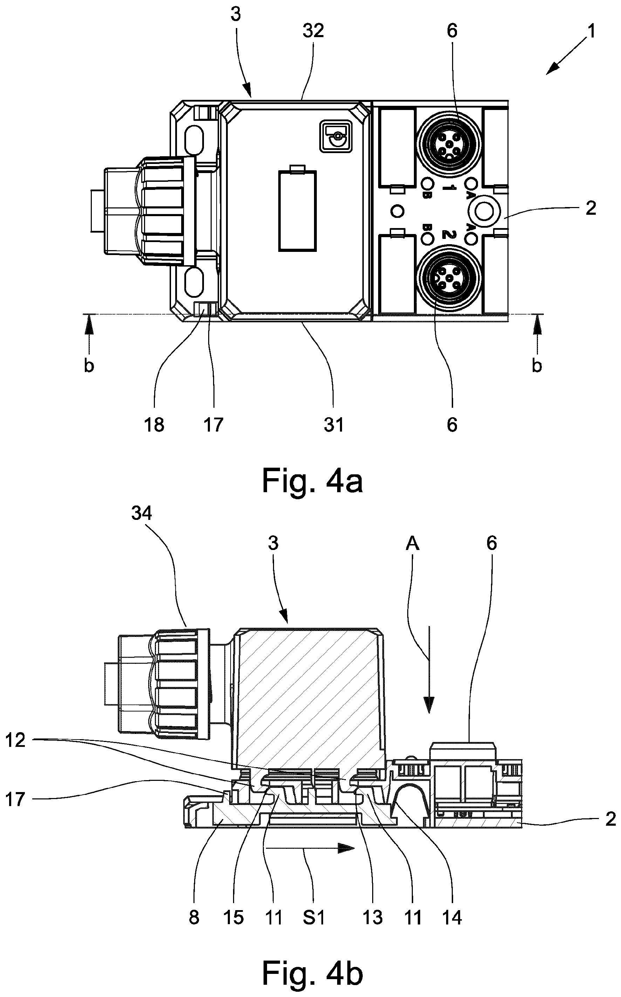

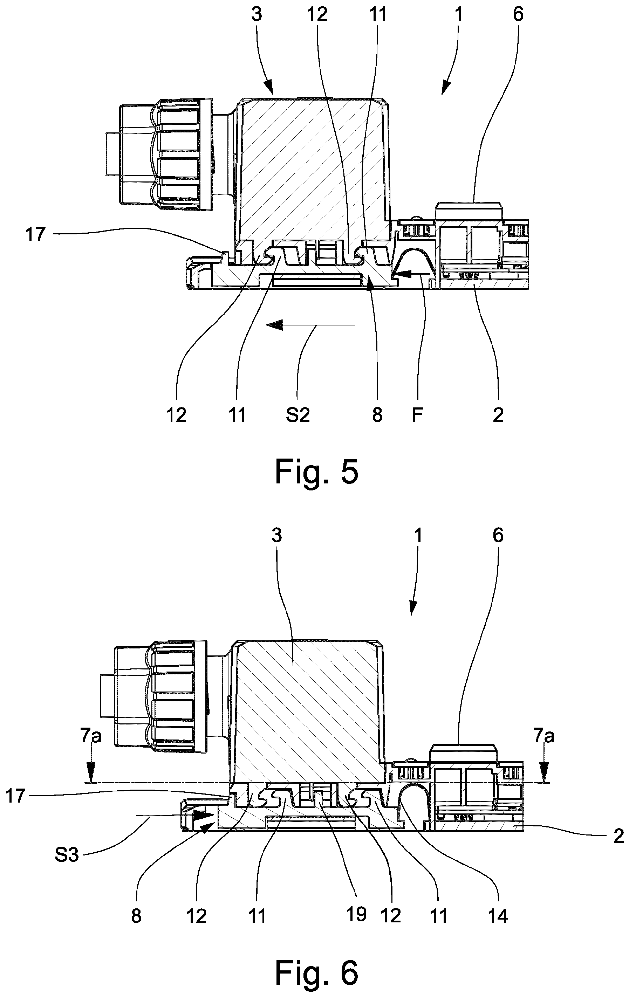

Das Zusammenwirken eines Schieberelements 8 und seiner beiden Rastelemente 11 mit den am Anschlussgehäuse 3 ausgebildeten Gegenrastelementen 12 wird nachfolgend anhand der Figuren 4 und 5 erläutert. Fig. 4 zeigt einen Sensor-Aktor-Verteiler 1, mit einem teilaufgesteckten Anschlussgehäuse 3, während Fig. 5 den Sensor-Aktor-Verteiler 1 mit vollständig aufgestecktem Anschlussgehäuse 3 zeigt. Die Aufsteckrichtung A des Anschlussgehäuses 3 auf das Grundgehäuse 2 ist dabei senkrecht zur Oberfläche des Grundgehäuses 2. Wird das Anschlussgehäuse 3 in Aufsteckrichtung A auf das Grundgehäuse 2 bzw. dessen Aufnahmebereich 4 aufgesteckt, so gleiten die Seiten 31, 32 des Anschlussgehäuses 3 an den entsprechenden Seiten 21, 22 des Grundgehäuses 2 entlang, wodurch eine Zentrierung des Anschlussgehäuses 3 erfolgt. Danach gleiten die Gegenrastelemente 12 mit ihren Schrägen 15 zunächst entlang der jeweiligen Schräge 13 der Rastelemente 11, wodurch das Schieberelement 8 entgegen der auf das Schieberelement 8 wirkenden Federkraft F aus der ersten Position gemäß Fig. 3b in Bewegungsrichtung S₁ in Richtung einer zweiten Position verschoben wird, wie dies in Fig. 4b dargestellt ist.

Die zweite Position des Schieberelements 8 ist dabei dann erreicht, wenn die freien Enden der Gegenrastelemente 12 die freien Enden der Rastelemente 11 passiert haben. Aufgrund der vom Federelement 14 auf das Schieberelement 8 wirkenden Federkraft F wird dann das Schieberelement 8 automatisch zurück in die erste Position verschoben, und es kommt zum Eingriff der Gegenrastelemente 12 mit den jeweils korrespondierenden Rastelementen 11, wie dies in Fig. 5 dargestellt ist. Die Bewegungsrichtung S₂ von der zweiten Position des Schieberelements 8 in die erste Position ist dabei entgegengesetzt gerichtet zur Bewegungsrichtung S₁ beim Verschieben des Schieberelements 8 aus seiner ersten Position in seine zweite Position.

Ist das Anschlussgehäuse 3 vollständig auf das Grundgehäuse 2 aufgesteckt, so sind die Rastelemente 11 am Schieberelement 8 mit den Gegenrastelementen 12 des Anschlussgehäuses 3 verrastet. Das Einrasten erfolgt dabei durch die von dem Federelement 14 auf das Schieberelement 8 in die Bewegungsrichtung S₂ wirkende Federkraft F, wobei bei der Verrastung ein Klick-Geräusch entsteht, sodass der Anwender eine akustische Rückmeldung erhält, dass das Anschlussgehäuse 3 am Grundgehäuse 2 verrastet ist.

Ist das Anschlussgehäuse 3 mit dem Grundgehäuse 2 verrastet, so ist auch der von dem Anschlussgehäuse 3 abgedeckte Aufnahmebereich 4 sicher abgedichtet, wozu im Aufnahmebereich 4 des Grundgehäuses 2 ein Dichtelement 16 angeordnet ist, wie dies aus den Figuren 2 und 3a ersichtlich ist. Das Dichtelement 16 ist dazu in einer am Grundgehäuse 2 ausgebildeten Nut eingesetzt oder eingespritzt. Alternativ oder zusätzlich kann auch am Anschlussgehäuse 3 ein Dichtelement vorgesehen sein, durch das beispielsweise zusätzlich eine im Anschlussgehäuse 3 und im Aufnahmebereich 4 des Grundgehäuses 2 angeordnete Steckverbindung abgedichtet werden kann.

Bei dem in den Figuren dargestellten erfindungsgemäßen Sensor-Aktor-Verteiler 1 kann das Anschlussgehäuse 3 nicht nur einfach durch Verrasten am Grundgehäuse 2 befestigt werden, sondern die Verriegelung zwischen den Rastelementen 11 und den Gegenrastelementen 12 kann bei Bedarf von einem Anwender auch wieder gelöst werden. Hierzu ist an dem Schieberelement 8 ein Betätigungsabschnitt 17 ausgebildet, mit dem das Schieberelement 8 entgegen der auf ihn wirkenden Federkraft F aus der ersten Position in die zweite Position oder über die zweite Position hinaus in eine dritte Position verschoben werden kann. Der Betätigungsabschnitt 17 kann dabei entweder von Hand, mit einem Finger, oder mit Hilfe eines Werkzeugs, beispielsweise einem Schraubendreher betätigt werden. Bewegungsrichtung S₃ von der ersten Position des Schieberelements 8 in die dritte Position ist dabei in dieselbe Richtung gerichtet wie die Bewegungsrichtung S₁ beim Verschieben des Schieberelements 8 aus seiner ersten Position in seine zweite Position.

Während die Verschiebung des Schieberelements 8 aus seiner ersten Position in seine zweite Position beim Aufstecken des Anschlussgehäuses 3 auf das Grundgehäuse 2 selbständig erfolgt, erfolgt die Verschiebung des Schieberelements 8 aus seiner ersten Position in seine dritte Position zum Lösen der Verriegelung durch den Anwender, entweder mit einem Finger oder einem Werkzeug. Wie aus Fig. 3 ersichtlich ist, ist im Grundgehäuse 2 eine Öffnung 18 ausgebildet, aus der der Betätigungsabschnitt 17 herausragt. Dadurch kann der Betätigungsabschnitt 17 mit einem Finger oder durch Einstecken eines Werkzeugs, beispielsweise eines Schraubendrehers, in die Öffnung 18 aus der in Fig. 5 gezeigten ersten Position, in die in Fig. 6 gezeigte dritte Position verschoben werden. Wie aus Fig. 6 ersichtlich ist, sind in der dritten Position des Schieberelements 8 die Rastelemente 11 nicht mit den Gegenrastelementen 12 in Eingriff, sodass die Verrastung zwischen dem Anschlussgehäuse 3 und dem Grundgehäuse 2 gelöst ist und das Anschlussgehäuse 3 einfach von dem Grundgehäuse 2 entgegengesetzt zur Aufsteckrichtung A abgezogen werden kann.

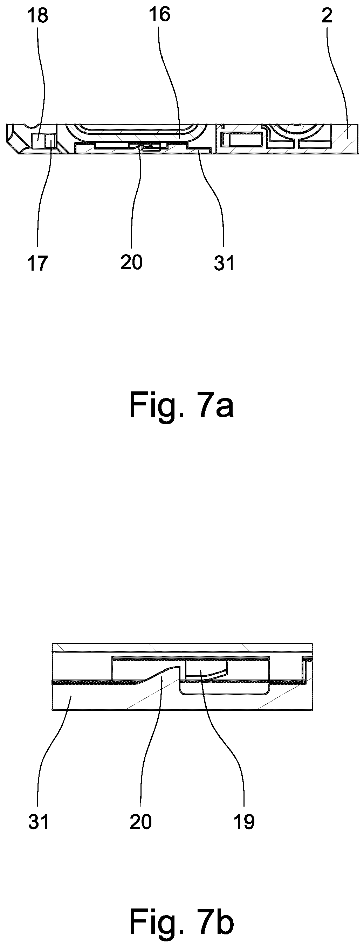

Aus der Fig. 6 und insbesondere aus den beiden Schnittdarstellungen gemäß Fig. 7 ist darüber hinaus erkennbar, dass an dem Schieberelement 8 zusätzlich zu den beiden Rastelementen 11 noch ein Halteelement 19 und an der Seite 31 des Anschlussgehäuses 3 ein zum Halteelement 19 korrespondierendes Gegenhalteelement 20 ausgebildet ist. Befindet sich das Schieberelement 8 in der in den Figuren 6 und 7 dargestellten dritten Position, so sind das Halteelement 19 und das Gegenhalteelement 20 derart miteinander verrastet, dass das Schieberelement 8 entgegen der auf ihn wirkenden Federkraft F in der dritten Position gehalten wird. Dadurch kann das Anschlussgehäuse 3 einfach vom Grundgehäuse 2 abgehoben werden, ohne dass das Schieberelement 8 noch durch Betätigung des Betätigungsabschnitts 17 durch einen Anwender in der dritten Position gehalten werden muss. Ist das Anschlussgehäuse 3 vom Grundgehäuse 2 abgehoben, so wird das Schieberelement 8 durch die Federkraft F des Federelements 14 automatisch wieder in seine erste Position verschoben, die in Fig. 3b dargestellt ist.

Fig. 8 zeigt zwei Ausführungsbeispiele eines Schieberelements 8 und eines separaten Federelements 14 jeweils in perspektivischer Darstellung. Die beiden Federelemente 14 sind jeweils als Blattfedern ausgebildet, die einfach aus einem Blech ausgestanzt und in ihre gewünschte Form gebogen werden können. Das in Fig. 8a dargestellte Schieberelement 8 weist neben den beiden Rastelementen 11 noch das zuvor beschriebene Halteelement 19 und den Betätigungsabschnitt 17 auf, sodass dieses Schieberelement 18 ein gewolltes Lösen der Verrastung zwischen dem Anschlussgehäuse 3 und dem Grundgehäuse 2 durch Verschieben des Betätigungsabschnitts 17 bzw. des Schieberelements 8 ermöglicht.

Bei dem in Fig. 8b dargestellten Schieberelement 8 sind dagegen weder eine Betätigungsabschnitt noch ein Halteelement vorhanden. Ist dieses Schieberelement 8 in der Ausnehmung 9 im Grundgehäuse 2 eingesetzt, so ermöglicht es nur ein einmaliges werkzeugloses Montieren des Anschlussgehäuses 3 auf dem Grundgehäuse 2. Ein entsprechender Sensor-Aktor-Verteiler 1 ermöglicht somit kein einfaches Lösen der Verrastung zwischen Anschlussgehäuse 3 und Grundgehäuse 2, sodass eine Demontage des Anschlussgehäuses 3 durch einen Anwender verhindert wird. Eine Änderung oder Manipulation eines eingebauten Sensor-Aktor-Verteilers 1 durch einen Anwender wird dadurch gewollt verhindert.

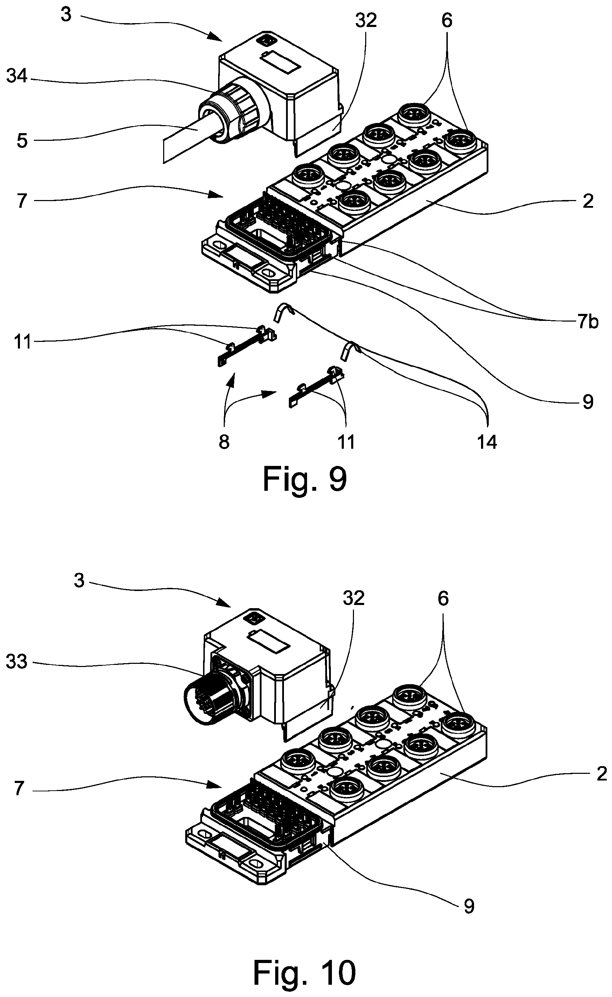

Fig. 9 zeigt eine perspektivische Darstellung eines zweiten Ausführungsbeispiels eines Sensor-Aktor-Verteilers 1 mit noch nicht montiertem Anschlussgehäuse 3. Dieser Sensor-Aktor-Verteiler 1 unterscheidet sich zunächst durch die Ausgestaltung des im Anschlussbereich 4 des Grundgehäuses 2 angeordneten Anschlusses 7 von dem in Fig. 2 dargestellten Sensor-Aktor-Verteiler 1. Während bei dem Ausführungsbeispiel gemäß Fig. 2 der Anschluss 7 von einem Leiterplatten-Stecker bzw. zwei Leiterplatten-Grundleisten 7a gebildet wird, besteht der Anschluss 7 bei dem Ausführungsbeispiel gemäß Fig. 9 aus einer Mehrzahl von Schneidklemmen 7b, in die die einzelnen Adern der anzuschließenden Stammleitung 5 eingerückt werden. Darüber hinaus kann bei dem in Fig. 9 dargestellten Sensor-Aktor-Verteiler 1 im Unterschied zu den in den Figuren 1 bis 7 dargestellten Sensor-Aktor-Verteiler 1 ein einmal montiertes Anschlussgehäuse 3 nicht wieder einfach demontiert werden. Die bei dem in Fig. 9 dargestellten Sensor-Aktor-Verteiler 1 eingesetzten Schieberelemente 8 weisen daher keinen Betätigungsabschnitt 17 und auch kein Halteelement 19 auf. Außerdem ist in dem Grundgehäuse 2 auch keine Öffnung 18 für einen Betätigungsabschnitt 17 ausgebildet.

Bei dem in Fig. 10 dargestellten dritten Ausführungsbeispiel eines Sensor-Aktor-Verteilers 1 ist im Anschlussgehäuse 3 ein Rundsteckverbinder 33, vorliegend ein M23 Steckverbinder eingebaut, an dem die Stammleitung 5 mittels eines mit dem Ende der Stammleitung 5 verbundenen Gegensteckverbinders angeschlossen werden kann. Das Anschlussgehäuse 3 dient bei diesem erfindungsgemäßen Ausführungsbeispiel somit zwar ebenfalls zum Anschluss einer Stammleitung 5, nicht jedoch zur Aufnahme eines Endes der Stammleitung 5, wie dies bei dem Ausführungsbeispiel gemäß den Fig. 1 und 2 sowie dem Ausführungsbeispiel gemäß Fig. 9 der Fall ist, bei denen im Anschlussgehäuse 3 eine Kabeldurchführung 34 für die Stammleitung 5 vorgesehen ist.

### Bezugszeichen

- 1: Sensor-Aktor-Verteiler
- 2: Grundgehäuse
- 21, 22: Seiten des Grundgehäuses
- 3: Anschlussgehäuse
- 31, 32: Seiten des Anschlussgehäuses
- 33: Rundsteckverbinder
- 34: Kabeldurchführung
- 4: Aufnahmebereich
- 5: Stammleitung
- 6: Anschlüsse (M12)
- 7: Anschluss
- 8: Schieberelement
- 9: Ausnehmung
- 10: Führungselemente
- 11: Rastelement
- 12: Gegenrastelement
- 13: Schräge
- 14: Federelement
- 15: Schräge
- 16: Dichtelement
- 17: Betätigungsabschnitt
- 18: Öffnung
- 19: Halteelement
- 20: Gegenhalteelement

- A: Aufsteckrichtung Anschlussgehäuse
- S1: Bewegungsrichtung Schieberelement Pos 1 - Pos 2
- S2: Bewegungsrichtung Schieberelement Pos 2 - Pos 1
- S3: Bewegungsrichtung Schieberelement Pos 1 - Pos 3
- F: Federkraft

## Patentansprüche

1. Sensor-Aktor-Verteiler (1) mit einem Grundgehäuse (2) und mit einem Anschlussgehäuse (3), wobei das Grundgehäuse (2) einen Aufnahmebereich (4) zum Aufstecken des Anschlussgehäuses (3) aufweist und das Anschlussgehäuse (3) zum Anschluss einer Stammleitung (5) ausgebildet ist,
wobei im Grundgehäuse (2) mehrere Anschlüsse (6) zum Anschließen von Sensoren und/oder Aktoren und im Aufnahmebereich (4) des Grundgehäuses (2) mindestens ein Anschluss (7) zum Anschließen einer Stammleitung (5) angeordnet sind,
wobei mindestens ein federbelastetes Schieberelement (8) verschiebbar am Grundgehäuse (2) oder am Anschlussgehäuse (3) angeordnet ist, wobei das Schieberelement (8) mindestens ein Rastelement (11) aufweist,
wobei das Anschlussgehäuse (3) oder das Grundgehäuse (2) mindestens ein zum Rastelement (11) korrespondierendes Gegenrastelement (12) aufweist, wobei das mindestens eine Rastelement (11) eine Schräge (13) aufweist, die derart angeordnet ist, dass beim Aufstecken des Anschlussgehäuses (3) auf den Aufnahmebereich (4) des Grundgehäuses (2) das mindestens eine Gegenrastelement (12) an der Schräge (13) des mindestens einen Rastelements (11) entlanggleitet, sodass das federbelastete Schieberelement (8) entgegen einer auf ihn wirkenden Federkraft (F) aus einer ersten Position in eine zweite Position verschoben wird,
wobei das federbelastete Schieberelement (8) durch die auf ihn wirkende Federkraft (F) in seine erste Position zurückgeschoben wird, wenn das Anschlussgehäuse (3) auf das Grundgehäuse (2) aufgesteckt ist, sodass das Rastelement (11) mit dem Gegenrastelement (12) verrastet, und
wobei an dem mindestens einen Schieberelement (8) ein Betätigungsabschnitt (17) ausgebildet ist, mit dem das Schieberelement (8) entgegen der auf ihn wirkenden Federkraft (F) aus der ersten Position in die zweite oder eine dritte Position verschiebbar ist, wobei in der zweiten und dritten Position des Schieberelements (8) die Rastelemente (11) nicht mit den Gegenrastelementen (12) in Eingriff sind,
**dadurch gekennzeichnet,**
**dass** an den beiden Schieberelementen (8) jeweils ein Halteelement (19) und an den beiden Seiten (31, 32) des Anschlussgehäuses (3) jeweils ein korrespondierendes Gegenhalteelement (20) ausgebildet ist, wobei ein Schieberelement (8) bei aufgestecktem Anschlussgehäuse (3) entgegen der auf ihn wirkenden Federkraft (F) in der dritten Position gehalten wird, wenn das Halteelement (19) an dem Gegenhalteelement (20) verrastet ist.

2. Sensor-Aktor-Verteiler (1) nach Anspruch 1, **dadurch gekennzeichnet, dass** zwei federbelastete Schieberelemente (8) verschiebbar am Grundgehäuse (2) oder am Anschlussgehäuse (3) angeordnet sind, wobei jeweils ein Schieberelement (8) an einer Seite (21, 22) des Grundgehäuses (2) oder an einer Seite (31, 32) des Anschlussgehäuses (3) angeordnet ist.

3. Sensor-Aktor-Verteiler (1) nach Anspruch 1 oder 2, **dadurch gekennzeichnet, dass** im Grundgehäuse (2) oder im Anschlussgehäuse (3) ein Federelement (14) angeordnet ist, das das mindestens eine federbelastete Schieberelement (8) derart mit einer Kraft beaufschlagt, dass die Kraft des Federelements (14) einem Verschieben des Schieberelements (8) aus seiner ersten Position in seine zweite Position entgegengerichtet ist.

4. Sensor-Aktor-Verteiler (1) nach Anspruch 3, **dadurch gekennzeichnet, dass** das Federelement (14) als vom Schieberelement (8) separates Bauteil, insbesondere als Blattfeder aus Edelstahl, ausgebildet ist.

5. Sensor-Aktor-Verteiler (1) nach Anspruch 3, **dadurch gekennzeichnet, dass** das Federelement (14) einstückig mit dem Schieberelement (8) ausgebildet ist.

6. Sensor-Aktor-Verteiler (1) nach einem der Ansprüche 1 bis 5, **dadurch gekennzeichnet, dass** das mindestens eine Gegenrastelement (12) eine zur Schräge (13) des Rastelements (11) korrespondierende Schräge (15) aufweist, sodass beim Aufstecken des Anschlussgehäuses (3) auf den Aufnahmebereich (4) des Grundgehäuses (2) die Schräge (13) des Rastelements (11) und die Schräge (15) des Gegenrastelements (12) aufeinander gleiten.

7. Sensor-Aktor-Verteiler (1) nach einem der Ansprüche 1 bis 6, **dadurch gekennzeichnet, dass** das mindestens eine Schieberelement (8) mindestens zwei, vorzugsweise als Rasthaken ausgebildete, Rastelemente (11) aufweist.

8. Sensor-Aktor-Verteiler (1) nach einem der Ansprüche 1 bis 7, **dadurch gekennzeichnet, dass** im Aufnahmebereich (4) des Grundgehäuses (2) ein Dichtelement (16) angeordnet ist.

9. Sensor-Aktor-Verteiler (1) nach einem der Ansprüche 1 bis 8, **dadurch gekennzeichnet, dass** im Aufnahmebereich (4) des Grundgehäuses (2) Führungselemente und am Anschlussgehäuse (3) korrespondierende Führungselemente ausgebildet sind, wobei die Führungselemente am Grundgehäuses (2) mit den Führungselementen am Anschlussgehäuse (3) beim Aufstecken des Anschlussgehäuses (3) auf den Aufnahmebereich (4) zusammenwirken.

10. Sensor-Aktor-Verteiler (1) nach einem der Ansprüche 1 bis 9, **dadurch gekennzeichnet, dass** an den beiden Seiten (21, 22) des Grundgehäuses (2) jeweils ein federbelastetes Schieberelement (8) verschiebbar angeordnet ist, wobei an den Schieberelementen (8) jeweils zwei Rasthaken als Rastelemente (11) ausgebildet sind und dass an den beiden korrespondierenden Seiten (31, 32) des Anschlussgehäuses (3) jeweils zwei Rasthaken als Gegenrastelemente (12) ausgebildet sind.

11. Sensor-Aktor-Verteiler (1) nach einem der Ansprüche 1 bis 10, **dadurch gekennzeichnet, dass** die Schieberelemente (8) durch die an ihnen angreifende Federkraft (F) automatisch wieder aus ihrer dritten Position in ihre erste Position verschoben werden, wenn das Anschlussgehäuse (3) vom Grundgehäuse (2) abgehoben ist.

## Claims

1. Sensor-actuator distributor (1) comprising a base housing (2) and a connection housing (3), wherein the base housing (2) has a receiving region (4) onto which the connection housing (3) can be plugged and the connection housing (3) is configured for connecting a trunk line (5), wherein in the base housing (2) a plurality of connectors (6) for connecting sensors and/or actuators and, in the receiving region (4) of the base housing (2), at least one connector (7) for connecting a trunk line (5) are arranged, wherein at least one spring-loaded sliding element (8) is arranged displaceably on the base housing (2) or on the connection housing (3), wherein the sliding element (8) comprises at least one latching element (11), wherein the connection housing (3) or the base housing (2) comprises at least one counter-latching element (12) corresponding to the latching element (11), wherein the at least one latching element (11) comprises an inclined surface (13) which is arranged such that, when the connection housing (3) is plugged onto the receiving region (4) of the base housing (2), the at least one counter-latching element (12) slides along the inclined surface (13) of the at least one latching element (11),so that the spring-loaded sliding element (8) is displaced, against a spring force (F) acting on it, from a first position into a second position, wherein the spring-loaded sliding element (8) is pushed back by the spring force (F) acting on it into its first position when the connection housing (3) is plugged onto the base housing (2), such that the latching element (11) latches with the counter-latching element (12), and wherein an actuating section (17) is formed on the at least one sliding element (8), by means of which the sliding element (8) is displaceable, against the spring force (F) acting on it, from the first position into the second or third position, wherein in the second and third positions of the sliding element (8) the latching elements (11)are not in engagement with the counter-latching elements (12), **characterized in that** a respective retaining element (19) is formed on each of the two sliding elements (8) and a respective corresponding counter-retaining element (20) is formed on each of the two sides (31, 32) of the connection housing (3), wherein one sliding element (8) is held, with the connection housing (3) plugged on, against the spring force (F) acting on it in the third position when the retaining element (19) is latched with the counter-retaining element (20).

2. Sensor-actuator distributor (1) according to claim 1, **characterized in that** two spring-biased sliding elements (8) are slidably arranged on the base housing (2) or on the connection housing (3), wherein in each case one sliding element (8) is arranged on one side (21, 22) of the base housing (2) or on one side (31, 32) of the connection housing (3).

3. Sensor-actuator distributor (1) according to claim 1 or 2, **characterized in that** a spring element (14) is arranged in the base housing (2) or in the connection housing (3), which exerts a force on the at least one spring-loaded sliding element (8) such that the force of the spring element (14) is directed counter to a displacement of the sliding element (8) from its first position into its second position.

4. Sensor-actuator distributor (1) according to claim 3, **characterized in that** the spring element (14) is formed as a component separate from the sliding element (8), in particular as a stainless steel leaf spring.

5. Sensor-actuator distributor (1) according to claim 3, **characterized in that** the spring element (14) is integrally formed with the sliding element (8).

6. Sensor-actuator distributor (1) according to any one of claims 1 to 5, **characterized in that** the at least one counter-latching element (12) comprises an inclined surface (15) corresponding to the inclined surface (13) of the latching element (11), such that, upon fitting the connection housing (3) onto the receiving region (4) of the base housing (2), the inclined surface (13) of the latching element (11) and the inclined surface (15) of the counter-latching element (12) slide along one another.

7. Sensor-actuator distributor (1) according to any one of claims 1 to 6, **characterized in that** the at least one sliding element (8) comprises at least two latching elements (11), which are preferably formed as latching hooks.

8. Sensor-actuator distributor (1) according to any one of claims 1 to 7, **characterized in that** a sealing element (16) is arranged in the receiving region (4) of the base housing (2).

9. Sensor-actuator distributor (1) according to any one of claims 1 to 8, **characterized in that** guide elements are formed in the receiving region (4) of the base housing (2) and corresponding guide elements are formed on the connection housing (3), wherein the guide elements on the base housing (2) cooperate with the guide elements on the connection housing (3) when the connection housing (3) is plugged onto the receiving region (4).

10. Sensor-actuator distributor (1) according to any one of claims 1 to 9, **characterized in that** on each of the two sides (21, 22) of the base housing (2) a spring-loaded sliding element (8) is slidably arranged, wherein two latching hooks as latching elements (11) are formed on each sliding element (8), and **in that** two latching hooks as counter-latching elements (12) are formed on each of the two corresponding sides (31, 32) of the connection housing (3).

11. Sensor-actuator distributor (1) according to any one of claims 1 to 10, **characterized in that** the sliding elements (8) are automatically displaced back from their third position into their first position by the spring force (F) acting on them when the connection housing (3) is lifted off the base housing (2).

## Revendications

1. Répartiteur pour capteurs et actionneurs (1) comprenant un boîtier de base (2) et comprenant un boîtier de raccordement (3), le boîtier de base (2) possédant une zone de réception (4) destinée à l'enfichage du boîtier de raccordement (3) et le boîtier de raccordement (3) étant configuré pour le raccordement d'une ligne principale (5),
plusieurs connexions (6) destinées au raccordement de capteurs et/ou d'actionneurs étant disposées dans le boîtier de base (2), et au moins une connexion (7) destinée au raccordement d'une ligne principale (5) dans la zone de réception (4) du boîtier de base (2),
au moins un élément coulissant (8) sollicité par ressort étant disposé de manière coulissante sur le boîtier de base (2) ou sur le boîtier de raccordement (3), l'élément coulissant (8) possédant au moins un élément d'encliquetage (11),
le boîtier de raccordement (3) ou le boîtier de base (2) possédant au moins un élément d'encliquetage complémentaire (12) correspondant à l'élément d'encliquetage (11),
l'au moins un élément d'encliquetage (11) possédant un biseau (13) qui est disposé de telle sorte que, lors de l'enfichage du boîtier de raccordement (3) sur la zone de réception (4) du boîtier de base (2), l'au moins un élément d'encliquetage complémentaire (12) glisse le long du biseau (13) de l'au moins un élément d'encliquetage (11), de sorte que l'élément coulissant (8) sollicité par ressort est déplacé, à l'encontre d'une force de ressort (F) agissant sur celui-ci, d'une première position vers une deuxième position,
l'élément coulissant (8) sollicité par ressort étant ramené dans sa première position par la force du ressort (F) qui agit sur celui-ci lorsque le boîtier de raccordement (3) est enfiché sur le boîtier de base (2), de sorte que l'élément d'encliquetage (11) s'enclenche avec l'élément d'encliquetage complémentaire (12), et une portion d'actionnement (17) étant formée au niveau de l'au moins un l'élément coulissant (8), à l'aide de laquelle l'élément coulissant (8) peut être coulissé de la première position vers la deuxième ou une troisième position, à l'encontre de la force de ressort (F) agissant sur celui-ci, les éléments d'encliquetage (11) n'étant pas en prise avec les éléments d'encliquetage complémentaires (12) dans les deuxième et troisième positions de l'élément coulissant (8),
**caractérisé en ce**
**qu'**un élément de retenue (19) est respectivement formé sur les deux éléments coulissants (8) et un élément de retenue complémentaire (20) respectivement sur les deux côtés (31, 32) du boîtier de raccordement (3), un élément coulissant (8) étant maintenu dans la troisième position lorsque le boîtier de raccordement (3) est enfiché à l'encontre de la force de ressort (F) agissant sur celui-ci lorsque l'élément de retenue (19) est enclenché sur l'élément de retenue complémentaire (20).

2. Répartiteur pour capteurs et actionneurs (1) selon la revendication 1, **caractérisé en ce que** deux éléments coulissants (8) sollicités par ressort sont disposés de manière coulissante sur le boîtier de base (2) ou sur le boîtier de raccordement (3), un élément coulissant (8) étant disposé respectivement sur un côté (21, 22) du boîtier de base (2) ou sur un côté (31, 32) du boîtier de raccordement (3).

3. Répartiteur pour capteurs et actionneurs (1) selon la revendication 1 ou 2, **caractérisé en ce qu'**un élément ressort (14) est disposé dans le boîtier de base (2) ou dans le boîtier de raccordement (3), lequel exerce une force sur l'au moins un élément coulissant (8) sollicité par ressort de telle sorte que la force de l'élément ressort (14) est dirigée à l'encontre d'un coulissement de l'élément coulissant (8) de sa première position à sa deuxième position.

4. Répartiteur pour capteurs et actionneurs (1) selon la revendication 3, **caractérisé en ce que** l'élément ressort (14) est réalisé sous la forme d'un composant séparé de l'élément coulissant (8), en particulier sous la forme d'un ressort à lame en acier inoxydable.

5. Répartiteur pour capteurs et actionneurs (1) selon la revendication 3, **caractérisé en ce que** l'élément ressort (14) est réalisé d'une seule pièce avec l'élément coulissant (8).

6. Répartiteur pour capteurs et actionneurs (1) selon l'une des revendications 1 à 5, **caractérisé en ce que** l'au moins un élément d'encliquetage complémentaire (12) possède un biseau (13) correspondant au biseau (15) de l'élément d'encliquetage (11), de sorte que lors de l'enfichage du boîtier de raccordement (3) sur la zone de réception (4) du boîtier de base (2), le biseau (13) de l'élément d'encliquetage (11) et le biseau (15) de l'élément d'encliquetage complémentaire (12) coulissent l'un sur l'autre.

7. Répartiteur pour capteurs et actionneurs (1) selon l'une des revendications 1 à 6, **caractérisé en ce que** l'au moins un élément coulissant (8) possède au moins deux éléments d'encliquetage (11), de préférence réalisés sous forme de crochets d'encliquetage.

8. Répartiteur pour capteurs et actionneurs (1) selon l'une des revendications 1 à 7, **caractérisé en ce qu'**un élément d'étanchéité (16) est disposé dans la zone de réception (4) du boîtier de base (2).

9. Répartiteur pour capteurs et actionneurs (1) selon l'une des revendications 1 à 8, **caractérisé en ce que**, dans la zone de réception (4) du boîtier de base (2) sont formés des éléments de guidage et des éléments de guidage correspondants sur le boîtier de raccordement (3), les éléments de guidage sur le boîtier de base (2) coopérant avec les éléments de guidage sur le boîtier de raccordement (3) lors de l'enfichage du boîtier de raccordement (3) sur la zone de réception (4).

10. Répartiteur pour capteurs et actionneurs (1) selon l'une des revendications 1 à 9, **caractérisé en ce que**, sur les deux côtés (21, 22) du boîtier de base (2) est respectivement disposé un élément coulissant (8) sollicité par ressort de manière à pouvoir coulisser, deux crochets d'encliquetage étant respectivement formés en tant qu'éléments d'encliquetage (11) sur les éléments coulissants (8), et **en ce que** sur les deux côtés correspondants (31, 32) du boîtier de raccordement (3) sont respectivement formés deux crochets d'encliquetage en tant d'éléments d'encliquetage complémentaires (12).

11. Répartiteur pour capteurs et actionneurs (1) selon l'une des revendications 1 à 10, **caractérisé en ce que** les éléments coulissants (8) sont automatiquement ramenés de leur troisième position à leur première position sous l'effet de la force de ressort (F) qui s'exerce sur eux lorsque le boîtier de raccordement (3) est retiré du boîtier de base (2).
